# NEUE EUROPÄISCHE PATENTSCHRIFT

(11) **EP 3 133 022 B2**
(45) Veröffentlichungstag und Bekanntmachung des Hinweises auf die Entscheidung über den Einspruch: **26.01.2022**
(45) Hinweis auf die Patenterteilung: 04.07.2018
(21) Anmeldenummer: 16188308.7
(22) Anmeldetag: 05.03.2013
(51) Int. Cl.: B65B 57/00, B65B 9/04, B65B 25/06, B65G 43/00

(54) **VERPACKUNGSLINIE**
PACKAGING LINE
LIGNE D'EMBALLAGE

(30) Priorität: 07.03.2012 DE 102012004341
(43) Veröffentlichungstag der Anmeldung: 22.02.2017
(62) Teilanmeldung aus: 13711844.4
(73) Patentinhaber: GEA Food Solutions Germany GmbH, 35216 Biedenkopf-Wallau (DE)
(72) Erfinder: DA COSTA MOREIRA, Nelson, 35216 Biedenkopf (DE); NAEHER, Tilmann, 87487 Wiggensbach (DE); REIN, Rolf, 35236 Breidenbach (DE)
(74) Vertreter: Kutzenberger Wolff & Partner

(56) Entgegenhaltungen:
- EP-A1- 0 847 925
- EP-A1- 0 963 913
- EP-A1- 1 323 634
- EP-A1- 1 719 707
- WO-A1-02/16210
- WO-A1-2004/113030
- DE-A1- 3 230 083
- DE-T2- 60 128 821
- DE-T2- 69 231 097
- GB-A- 1 384 722
- US-A- 3 805 477

## Beschreibung

Die vorliegende Erfindung betrifft ein Verfahren zum Betrieb einer Verpackungslinie mit einer Verpackungsmaschine und mindestens einer weiteren Komponente. Derartige Lebensmittelverpackungslinien sind aus dem Stand der Technik bekannt und werden dazu eingesetzt Lebensmittel, insbesondere proteinhaltige Lebensmittel, wie beispielsweise Wurst, Käse oder Schinken aber auch Frischfleisch und dergleichen in Verpackungen einzupacken. Eine derartige Lebensmittelverpackungslinie weist neben einer Verpackungsmaschine, beispielsweise eine Form-Füll-Siegel-Verpackungsmaschine (FFS-Verpackungsmaschine) oder ein sogenannter Traysealer, noch mindestens eine weitere Komponente auf, die sich stromaufwärts und/oder stromabwärts von der Verpackungsmaschine befindet. Dabei kann es sich beispielsweise um eine Aufschneidevorrichtung, eine Beladeeinrichtung, und/oder einen Portionierer, der beispielsweise eine Hackfleischmasse in bestimmte Portionen aufteilt und/oder formt, und/oder um eine Packungsvereinzelungsmaschine, die mehrbahnig ankommende Verpackungsströme in beispielsweise einen einbahnigen Verpackungsstrom aufreiht und/oder einen Detektor, mit dem beispielsweise metallische Fremdeinschlüsse in der Verpackung erkannt werden und/oder einen Scanner, mit dem die äußere Kontur und/oder die innere Struktur beispielsweise eines Lebensmittelriegels bestimmt wird, handeln. Derartige Lebensmittelverpackungslinien können eine beträchtliche Länge aufweisen. Bei den Lebensmittelverpackungslinien gemäß dem Stand der Technik weisen die Verpackungsmaschine und zumindest teilweise jede weitere Komponente eine lokale Bedieneinheit auf, mit der die Verpackungsmaschine bzw. jede weitere Komponente eingestellt werden kann und an der ein aufgetretener Fehler, nach dessen Behebung, quittiert werden kann. Des Weiteren weisen die Lebensmittelverpackungslinien gemäß dem Stand der Technik eine Linienkontrolle mit einer separaten Bedieneinheit auf, die die Linie steuert und von der aus die Linie gestartet und/oder gestoppt werden kann. Im Falle eines Fehlers an der Verpackungsmaschine oder einer weiteren Komponente muss das Bedienpersonal zunächst zu dieser Einheit laufen, den Fehler feststellen, beheben und quittieren. Danach muss das Bedienpersonal zu der Linienkontrolle laufen und von dort aus die Linie wieder starten. Dadurch entsteht entweder eine erhebliche Stillstandszeit der Lebensmittelverpackungslinie und/oder es muss sehr viel Personal vorgehalten werden, um auftretende Fehler schnell beheben zu können. EP-A-847 925 beschreibt ein Verfahren zum vollständigen Leerfahren einer Verpackungslinie mit einer Verpackungsmaschine und weiteren stromaufwärts und stromabwärts befindlichen Komponenten. Es war deshalb die Aufgabe der vorliegenden Erfindung eine Verpackungslinie, insbesondere eine Lebensmittelverpackungslinie und ein Verfahren zum Betrieb einer Verpackungslinie, insbesondere einer Lebensmittelverpackungslinie zur Verfügung zu stellen, die die Nachteile des Standes der Technik nicht aufweist.

Gegenstand der vorliegenden Erfindung ist ein Verfahren zum temporären Leerfahren einer Lebensmittelverpackungslinie mit einer Verpackungsmaschine und mindestens einer weiteren stromaufwärts befindlichen Komponente, bei dem, bis auf die Verpackungsmaschine, alle Komponenten leergefahren werden und alle mit einem Lebensmittel gefüllte Verpackungen geschlossen werden, jedoch teilweise in der Verpackungsmaschine und möglicherweise auch stromabwärts befindlichen Komponenten verbleiben.

Dieser Verfahrensmodus eignet sich beispielsweise bei einer Frühstückspause. Dadurch, dass alle stromaufwärts der Verpackungsmaschine befindlichen Komponenten leergefahren d.h. von Lebensmittel befreit werden, können die Lebensmittel dort keinen Schaden nehmen. Außerdem werden alle Verpackungen, in denen sich Lebensmittel befinden, verschlossenen, so dass diese Lebensmittelverpackungen trotz der temporären Unterbrechung des Verpackungsprozesses als Gutpackungen verkauft werden können.

Im Folgenden werden die Erfindungen anhand der Figuren eins und zwei erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- Figur 1: zeigt eine erste Ausführungsform der Lebensmittelverpackungslinie.
- Figur 2: zeigt eine weitere Ausführungsform der Verpackungslinie.
- Figur 3: zeigt eine weitere Ausführungsform der Verpackungslinie.

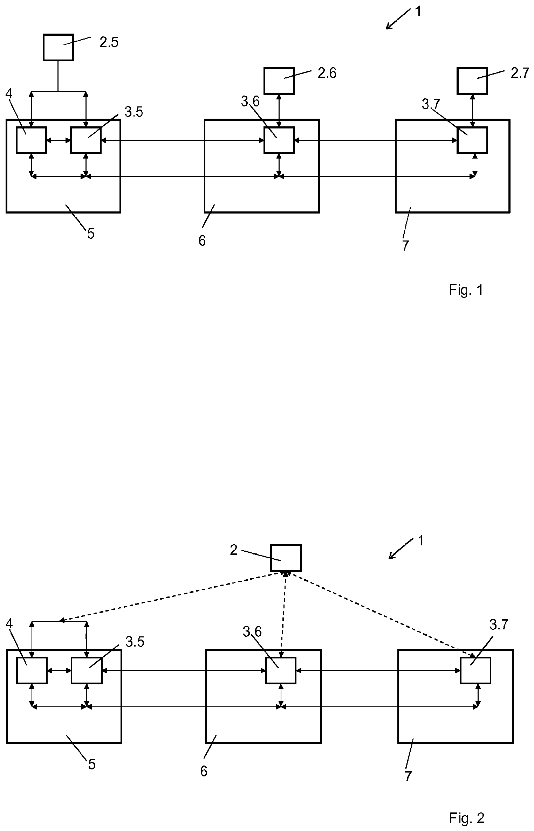

Figur 1 zeigt eine erste Ausführungsform der Lebensmittelverpackungslinie. Diese weist in dem vorliegenden Fall drei Komponenten 5, 6, 7 auf. Die Komponente 7 ist in dem vorliegenden Fall eine Verpackungsmaschine, insbesondere eine sogenannte Form-Füll-Siegel-Verpackungsmaschine (FFS-Verpackungsmaschine) und die Komponente 5 beispielsweise eine Aufschneidevorrichtung, mit der ein Lebensmittelriegel in Lebensmittelscheiben aufgeschnitten wird, die zu Portionen beispielsweise ä zehn Lebensmittelscheiben konfiguriert werden. Die Komponente 6 ist beispielsweise ein Loader, mit dem aufgeschnittene Portionen in die Verpackungsmulden der Verpackungsmaschine eingelegt werden. Jede Komponente 5, 6, 7 weist eine lokale speicherprogrammierbare Steuerung (SPS) 3.5, 3.6, 3.7 auf. Des Weiteren weist, bei der Ausführungsform gemäß Figur 1, jede Komponente 5, 6, 7 eine Bedieneinheit 2.5, 2.6, 2.7 auf. Darüber hinaus weist die Lebensmittelverpackungslinie 1 eine Linien-Regelung/Steuerung 4 auf. Diese Linien-Regelung/Steuerung 4 kann Teil einer der Komponenten 5, 6, 7 jedoch auch ein separates Bauteil/Baugruppe sein. Wie Figur 1 entnommen werden kann, können zwischen den lokalen SPS 3.5, 3.6, 3.7 Daten und Befehle jeweils bidirektional ausgetauscht werden. Desweiteren ist jede lokale SPS 3.5, 3.6, 3.7 auch mit der Linien-Regelung/Steuerung 4 bidirektional verbunden. Die Linien-Regelung/Steuerung weist keine eigene Bedieneinheit auf. Es ist nun möglich von jeder Bedieneinheit aus die gesamte Lebensmittelverpackungslinie zu steuern, also auch zu starten und/oder zu stoppen. Des Weiteren ist es möglich, von jeder Bedieneinheit aus den Status aller Komponenten 5, 6, 7 der Lebensmittelverpackungslinie aus zu überprüfen und gegebenenfalls angezeigte Fehler zu quittieren. Tritt beispielsweise ein Fehler an der Verpackungsmaschine 7 auf, kann das Bedienpersonal den Fehler dort beheben und von der Bedieneinheit 2.7 aus die Lebensmittelverpackungslinie erneut starten. Des Weiteren kann von der Bedieneinheit 2.7 aus überprüft werden, ob beispielsweise die Aufschneidevorrichtung 5 ordnungsgemäß funktioniert. Ein Rezeptwechsel kann außerdem von einer der Bedieneinheiten 2.5, 2.6, 2.7 initiiert werden. Dieser Rezeptwechsel wird dann der Linien-Regelung/Steuerung übermittelt, die die entsprechenden Informationen an die jeweiligen Komponenten übermittelt. Des Weiteren kann von der Bedieneinheit 2.5, 2.6, 2.7 eine Rezeptänderung initiiert werden, beispielsweise wenn in einem Rezept ein Fehler vorhanden ist. Diese Rezeptänderung wird dann der Linien-Regelung/Steuerung übermittelt, die die entsprechenden Informationen an die jeweiligen Komponenten übermittelt. Dadurch, dass die Linien-Steuerung/Regelung von jeder Bedieneinheit aus angesprochen werden kann und/oder die Lebensmittelverpackungslinie von jeder Bedieneinheit aus gesteuert, also beispielsweise gestartet und/oder gestoppt werden kann, werden dem Bedienpersonal, beispielsweise im Falle einer Störung der Verpackungslinie, erhebliche Wege erspart. Soll die Lebensmittelverpackungslinie beispielsweise bei einer Frühstückspause temporär leergefahren werden, so kann ein entsprechender Befehl in eine der Bedieneinheiten 2.5, 2.6, 2.7 eingegeben werden. Die Lebensmittelverpackungslinie ist dann vorzugsweise so programmiert, dass die Komponenten 5, 6 vollständig leergefahren werden d.h. alle in der Aufschneidevorrichtung vorhandenen Lebensmittelriegel werden vollständig zu Portionen aufgeschnitten und ggf. vorhandene Reststücke entsorgt. Danach werden alle vollständigen Portionen, die sich auf dem Loader 6 befinden, in die Verpackungsmulden, die beispielsweise in eine Folienbahn in der Verpackungsmaschine eingeformt worden sind, eingelegt, bis auch der Loader 6 vollständig entleert ist. Unvollständige Portionen, d.h. Portionen mit Untergewicht, werden vorzugsweise entsorgt. Des Weiteren werden alle Verpackungsmulden in der Verpackungsmaschine, in der sich Lebensmittelscheiben befinden, verschlossen, so dass diese während der Frühstückspause nicht kontaminiert werden. Für den Fall, dass die Verpackungsmulden eines Formates nicht vollständig mit Lebensmittelscheiben gefüllt werden können, werden einige Verpackungen als so genannte Leerverpackungen trotzdem mit einer Deckelfolie verschlossen und anschließend verworfen. Nach der Frühstückspause kann die Lebensmittelverpackungslinie dann wieder angefahren werden, indem ein Lebensmittelriegel in die Aufschneidevorrichtung eingelegt und aufgeschnitten wird. Soll die Lebensmittelverpackung hingegen für einen längeren Zeitraum, beispielsweise über Nacht, abgestellt werden, werden nicht nur die Komponenten 5, 6 vollständig leergefahren, sondern auch alle in die Folienbahn eingeformten Verpackungsmulden aus der Verpackungsmaschine entfernt. Ein derartiger vollständiger Stopp der Verpackungslinie kann auch beispielsweise für einen Formatwechsel eingesetzt werden.

In Figur 2 ist im Wesentlichen die Ausführungsform der Lebensmittelverpackungslinie gemäß Figur 1 dargestellt, mit dem Unterschied, dass in dem vorliegenden Fall alle Komponenten lediglich eine Bedieneinheit aufweisen. Dadurch können erhebliche Verkabelungswege und die jeweiligen Bedieneinheiten eingespart werden. Vorzugsweise handelt es sich bei der Bedieneinheit 2 um eine mobile Bedieneinheit beispielsweise ein Tablett-Computer. Diese Bedieneinheit 2 ist vorzugsweise drahtlos mit der Lebensmittelverpackungslinie 1 verbunden. Dafür weist die Lebensmittelverpackungslinie vorzugsweise eine Sende-/Empfangseinheit auf, die mit der Bedieneinheit 2 bidirektionale, vorzugsweise drahtlos kommunizieren kann. Von dieser Bedieneinheit 2 aus können alle Komponenten der Lebensmittelverpackungslinie gesteuert, also beispielsweise gestartet und gestoppt werden. Des Weiteren kann der Status jeder Komponente abgefragt und gegebenenfalls Korrekturen an der jeweiligen Komponente vorgenommen werden.

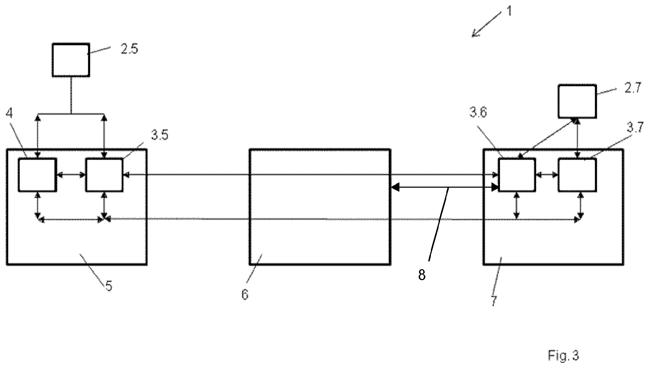

In Figur 3 ist im Wesentlichen die Ausführungsform der Lebensmittelverpackungslinie gemäß Figur 1 dargestellt, mit dem Unterschied, dass in dem vorliegenden Fall für die Komponente 6 keine eigene Steuerung vorgesehen ist. Die Steuerung 3.6 der Komponente 6 ist hier in die Komponente 7 integriert und wird von deren Bedieneinheit 2.7 bedient. Der Daten-/Befehlsaustausch zwischen der Komponente 6 und der Steuerung 3.6 ist durch den Doppelpfeil 8 symbolisiert. Der Fachmann erkennt, dass die Steuerungen 3.6, 3.7 eine Einheit seien können.

### Bezugszeichenliste:

- 1: Lebensmittelverpackungslinie
- 2: Bedieneinheit, mobile Bedieneinheit
- 2.5: Bedieneinheit
- 2.6: Bedieneinheit
- 2.7: Bedieneinheit
- 3.5: lokale Steuerung, lokale Speicher-programmierbare-Steuerung, lokale SPS
- 3.6: lokale Steuerung, lokale Speicher-programmierbare-Steuerung, lokale SPS
- 3.7: lokale Steuerung, lokale Speicher-programmierbare-Steuerung, lokale SPS
- 4: Linien-Regelung/Steuerung
- 5: Komponente der Linie
- 6: Komponente der Linie
- 7: Komponente der Linie, Verpackungsmaschine
- 8: Daten-/Befehlstransfer zwischen der Komponente und der lokalen Steuerung

## Patentansprüche

1. Verfahren zum temporären Leerfahren einer Lebensmittelverpackungslinie mit einer Verpackungsmaschine (7) und mindestens einer weiteren stromaufwärts und/oder stromabwärts befindlichen Komponente (5, 6), **dadurch gekennzeichnet, dass** bis auf die Verpackungsmaschine (7) alle stromaufwärtigen Komponenten leergefahren werden und alle mit einem Lebensmittel gefüllte Verpackungen geschlossen werden, jedoch teilweise in der Verpackungsmaschine verbleiben.

## Claims

1. Method for temporarily running empty a food packaging line, comprising a packaging machine (7) and at least one further component (5, 6) located upstream and/or downstream, **characterized in that** all upstream components are run empty apart from the packaging machine (7), and all packs filled with a food are closed, but partially remain in the packaging machine.

## Revendications

1. Procédé pour faire fonctionner à vide temporairement une ligne d'emballage de produits alimentaires, comprenant une machine d'emballage (7) et au moins un composant supplémentaire (5, 6) situé en amont et/ou en aval, **caractérisé en ce que** à l'exception de la machine d'emballage (7), tous les composants en amont sont entraînés à vide et tous les emballages remplis avec un produit alimentaire sont fermés, mais restent toutefois en partie dans la machine d'emballage.
